# EUROPÄISCHE PATENTSCHRIFT

(11) **EP 0 607 957 B1**
(45) Veröffentlichungstag und Bekanntmachung des Hinweises auf die Patenterteilung: **03.07.1996**
(21) Anmeldenummer: 94100773.4
(22) Anmeldetag: 20.01.1994
(51) Int. Cl.: B65G 21/02, B65G 21/06

(54) **Bausatz zur Standardisierung und Bildung eines Baukastensystems für Kettenförderer, Kettenstauförderer und/oder Zahnriemenförderer**
Construction set for standardizing and forming a modular structure for chain conveyors, accumulation chain conveyors and/or toothed belt conveyors
Ensemble de construction permettant de standardiser et de former un système modulaire pour transporteurs à chaînes, transporteurs à chaînes à accumulation et/ou transporteur à courroies dentées

(30) Priorität: 22.01.1993 DE 9300855 U
(43) Veröffentlichungstag der Anmeldung: 27.07.1994
(73) Patentinhaber: Gebhardt Fördertechnik GmbH, D-74889 Sinsheim (DE)
(72) Erfinder: Gebhardt, Günther, D-74915 Waibstadt (DE)
(74) Vertreter: Ratzel, Gerhard, Dr.

(56) Entgegenhaltungen:
- EP-A- 0 120 996
- EP-A- 0 242 276
- EP-A- 0 327 652
- EP-A- 0 329 832

## Beschreibung

Die Erfindung betrifft einen Bausatz zur Standardisierung und Bildung eines Baukastensystems für Kettenförderer, Kettenstauförderer und/oder Zahnriemenförderer.

Förderer der eingangs genannten Gattung dienen zum Transport verschiedensten Gutes innerhalb von Lagerhallen, Produktionsstätten oder Versandabfertigungen. Diese Förderanlagen sind je nach Anwendungsfall und kundenspezifischen Einsatzgebiete von unterschiedlicher Gestalt hinsichtlich Länge, Einteilung und Förderbreite der Anlage. Entsprechend ist jede Anlage neu zu konzipieren, zu konstruieren also zu planen und zu montieren.

Dies führte dazu, daß die zuvor genannten Vorleistungen stets im Endpreis ihren Niederschlag fanden.

Der vorliegenden Erfindung liegt daher die Aufgabe zugrunde, einen Bausatz zur Standardisierung und Bildung eines Baukastensystems für Kettenförderer, Kettenstauförderer und/oder Zahnriemenförderer zu schaffen, dessen Bausatzelemente, also die Erzeugnisteile für die verschiedensten spezifisch ausgelegten Anlagen verwendet und daher in Serie gefertigt werden können. Ziel ist es also, einen Förderer der eingangs genannten Gattungen herzustellen, der in Baugruppen, Untergruppen und Einzelteile aufgelöst werden kann, wobei eventuell Baugruppen miteinander kombinierbar sind, so daß auch bei den unterschiedlichsten kundenspezifischen Wünschen aus dem standardisierten Programm geschöpft werden kann.

Diese Aufgabe wird durch einen Bausatz gemäß des vorgeschlagenen Anspruchs 1 gelöst, wobei besonders bevorzugte Ausführungsbeispiele und Weiterbildungen der Erfindung in den Unteransprüchen gekennzeichnet sind.

Ein wesentlicher Bestandteil der Erfindung bildet hierbei das erfindungsgemäße Rahmenprofil, welches durch vorgefertigte Lagerbohrungen und entsprechender Formgebung dazu geeignet ist, eine Vormontage zuzulassen, so daß die, zur kundenspezifischen Verwirklichung der Förderanlage erforderlichen Erzeugnisteile nur noch zuzuordnen sind, wobei gegebenenfalls zwischen den spezifischen Einsatzteilen und den vorgefertigten Standardteilen ein Adapterglied zwischengeschaltet wird.

Da nun eine Vormontage lediglich dann möglich ist, wenn die vormontierten Teile universell der kundenspezifischen Anlagen zuzuordnen ist, bedarf es bei Förderanlagen der eingangs genannten Gattungen auch der anlagenspezifischen Anordnung bzw. Einteilung der Fördersektionen, die in unmittelbarer Abhängigkeit, beispielsweise von den Stauzonen ist. Hierbei bedarf es auch einer entsprechenden Führung der Fördermittel, die im Falle von Ketten oder Riemen eine bestimmte, dem Betrieb angepaßte Spannung aufweisen müssen. Wird nun auch ein vorstandardisiertes Fördermittel verwendet, bedarf es auch der Zuordnung einer entsprechenden Spanneinrichtung, welche ebenfalls universell einsetzbar ist, d.h. an die vormontierten Bausatzelemente anpaßbar ist.

Erfindungsgemäß ist nun vorgesehen, daß ein Rahmenprofil verwendet wird, welches beidseits der Förderbahn anzuordnen ist. In die beiden Rahmenprofile werden nun entsprechende Antriebswellen, in vorgefertigte Lagerbohrungen an nahezu beliebiger Profilstelle vormontiert. Durch die Bohrungen in den Rahmenprofilen wird ein Befestigungsmittel durchgeführt, welche über eine Führungsbüchse ein Führungslager aufnehmen, welches wiederum in der Antriebswelle eingefaßt ist. Die Antriebswelle selbst wird über ein Lager innerhalb eines Lagerdeckels angeordnet. Dieser wiederum wird von der Rahmenprofilinnenseite an das Rahmenprofil herangeführt und dort befestigt. An geeigneter, der Förderanlagen spezifischen Stelle werden entsprechende Umlenkräder montiert. Sodann wird das Fördermittel, dies kann ein Riemen oder eine Kette sein, aufgebracht, so daß es sich annähernd an der Profiloberkante erstreckt und über die Umlenkräder mit der Antriebswelle korrespondiert. Zum Zwecke des sauberen Kettenlaufes wird zwischen Umlenkrollen und Antriebswelle erfindungsgemäß eine Spannbox zwischengeschaltet, welche erlaubt eine standardisierte Kette oder Riemen zu verwenden, da über das Einstellungsspiel der Spannbox die Führungslänge des Riemens bzw. der Kette verkürzt oder verlängert werden kann.

Auch die Spannbox ist an beliebiger Profilstelle durch eine Mehrzahl von vorgefertigten Lagerbohrungen anordenbar, wobei diese darüber hinaus noch langlochförmige Lager- und Fixierausnehmungen besitzt, um eine nachträgliche Spannung des Fördermittels zu gewährleisten.

Zur Führung des Fördermittels besitzt die Spannbox einen auf dieses ausgelegten Umlenkkopf. Das Rahmenprofil besitzt Gleitkufen oder Nuten innerhalb derer die Motorkonsole oder auch der Lagerdeckel verschieblich anordenbar und fixierbar sind.

Vorgenannte Bausatzelemente können in die Nuten eingesetzt werden und bis an ihre Montageposition verschoben werden. Die dem Bausatz zuzuordnenden Kettenräder oder Riemenscheiben werden in das als Hohlprofil ausgebildete Rahmenprofil eingebracht und ebenfalls an einer beliebigen Profilstelle fixiert. Während die Kettenräder oder Riemenscheiben innerhalb des Rahmenprofiles versenkt, über der Antriebswelle gelagert sind, ragen die Umlenkräder über die Oberkante des Rahmenprofils hinaus. Das Rahmenprofil, welches an seiner Oberfläche offen ausgebildet ist, wird dann mit einer Gleitleiste abgedeckt, so daß das Fördermittel, beispielsweise die Kette eine Führung erhält. Die Antriebswelle selbst wird mit einem Führungslager versehen und erhält ihre eigentliche Lagerung innerhalb eines Lagerdeckels, welcher an die Rahmenprofilinnenkante befestigt wird. In den unteren Nuten bzw. Gleitschienen des Rahmenprofils kann die Motorkonsole eingeschoben und fixiert werden. Die bis hierher beschriebenen Bausatzelemente sind erfindungsgemäß standardisiert, so daß diesen lediglich noch eine, eine Adapterfunktion zu übernehmende Zwischenwelle zuordenbar ist, welche das eigentliche Verbindungsglied zwischen dem Bausatz und den übrigen Anlagenteilen bildet, wobei die Zwischenwelle die Breite der Förderanlage letztendlich festlegt.

Anhand den beigefügten Zeichnungen, die besonders bevorzugte Ausführungsbeispiele der Erfindung zeigen, wird diese nun näher beschrieben.
Dabei zeigen:
- Figur 1: einen Querschnitt durch eine Förderanlage;
- Figur 2: einen Längsschnitt der Förderanlage;
- Figur 3: eine Explosionsdarstellung des erfindungsgemäßen Bausatzes;
- Figur 4: das Rahmenprofil;
- Figur 5: die Antriebswelle;
- Figur 6: die Führungsbüchse;
- Figur 7: den Lagerdeckel;
- Figur 8: die Gleitleiste;
- Figur 9: ein vormontiertes Rahmenprofil.

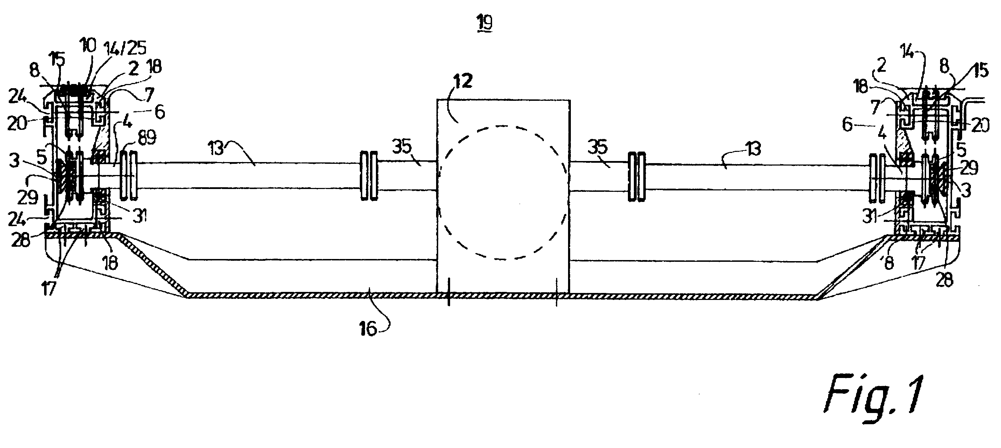

Figur 1 zeigt einen Querschnitt durch eine Förderanlage. In diesem Ausführungsbeispiel ist ein Kettenförderer bzw. Kettenstauförderer zu erkennen. Ein Motor 12 ist auf einer Konsole 16 montiert. Der Motor 12 trägt beidseits eine angetriebene Ausgangswelle 35. Die Motorkonsole 16 ist in links und rechts angeordneten Rahmenprofilen 2 eingeführt und befestigt. Die Rahmenprofile 2 sind als Hohlprofile ausgebildet, so daß sie in ihrem Inneren zumindestes teilweise die Antriebswellen 4 sowie die Kettenräder 5 bzw. Umlenkräder 8 aufnehmen. Die Antriebswellen 4 tragen an ihren Stirnseiten die entsprechenden Kettenräder 5 bzw. 89 und sind an der äußeren Profilwandung einem Führungslager 28 nebst Führungsbüchse 29 am Rahmenprofil 2 fixiert, während die Lagerung über ein, in einem Lagerdeckel 7 angeordneten Wellenlager 31 erfolgt.

Der Lagerdeckel 7 ist hierbei an der Profilinnenseite befestigt. Die Adaption zwischen Motor 12 bzw. deren angetriebenen Welle 35 und Antriebswelle 4 erfolgt über eine entsprechende Zwischenwelle 13. Die Verbindung zwischen Motor und Zwischenwelle bzw. zwischen Zwischenwelle und Antriebswelle erfolgt mit einer hier nicht dargestellten Duplexkette.

Die Umlenkräder 8 sind derart im Rahmenprofil 2 positioniert, daß sie über die Profiloberkante 15 ausragen, während die Kettenräder 5 im Rahmenprofil 2 versenkt sind.

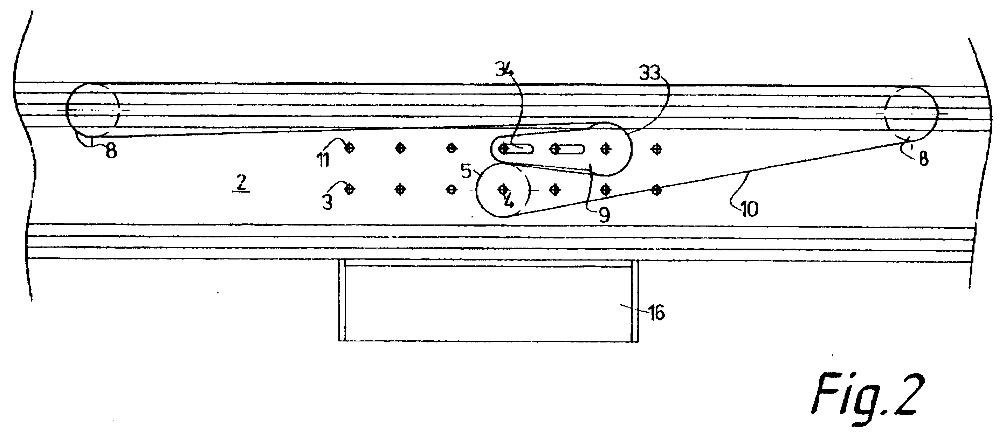

Die Figur 2 zeigt einen Längsschnitt vorgenannter Förderanlage. Das Rahmenprofil 2 sieht eine Vielzahl von vorgefertigten Lagerbohrungen 3 für die Positionierung der Antriebswelle 4 sowie eine Mehrzahl von Lagerbohrungen 11 für die Spannbox 9 vor. Dadurch kann zunächst die Position der Antriebswelle bzw. deren Kettenräder 5 sowie die der Spannbox 9 nahezu frei gewählt werden. Ebenso ist die Position der Umlenkräder 8 am Rahmenprofil 2 frei wählbar. Mit dem Bezugszeichen 10 ist das Fördermittel, hier eine Kette gekennzeichnet.

Es ragt in Längsrichtung des Rahmenprofiles 2 in die Transportbahn ein und wird über die Umlenkräder 8 zur Antriebswelle 4 bzw. dem Kettenrad 5 geführt.

Hierbei wird es über die Spannrolle 9 bzw. deren Umlenkkopf 33 gelegt. Mittels den langlochförmigen Lager- und Fixierausnehmungen 34 wird das Fördermittel bzw. die Kette 10 gespannt, da die Spannbox 9 somit in Längsrichtung des Rahmenprofils 2 verfahrbar ist.

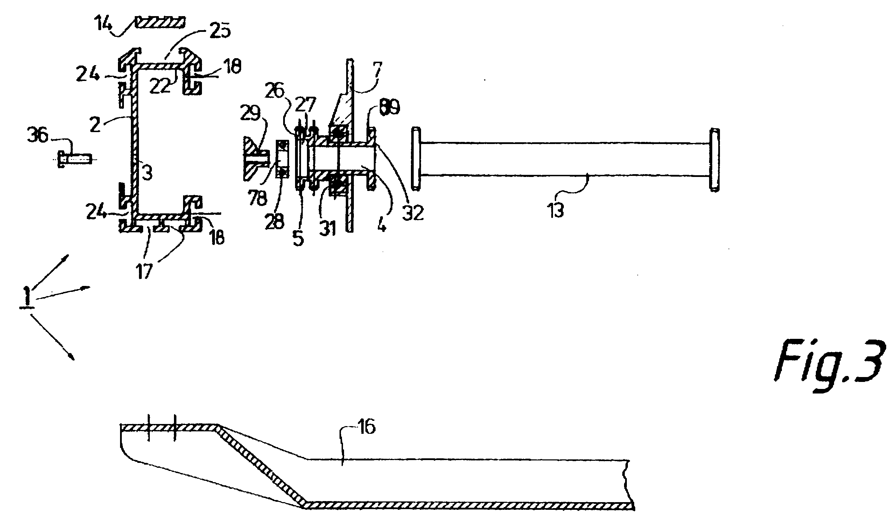

Die Figur 3 zeigt Teile des erfindungsgemäßen Bausatzes 1 in einer Explosionsdarstellung. Hier ist zunächst das Rahmenprofil 2, welches als Hohlprofil ausgebildet ist zu erkennen. Über die Befestigungsschraube 36, welche durch die Lagerbohrung 3 durchgeführt wird, wird die Führungsbüchse 29 aufgenommen. Auf die Führungsbüchse 29 wird das Führungslager 28 aufgebracht, welche wiederum gemeinsam in die Ausnehmung 27 der Antriebswelle 4 eingesetzt werden. Die Antriebswelle 4 wiederum trägt ein Wellenlager 31. Das die Antriebswelle 4 umgebende Wellenlager 31 wird in den Lagerdeckel 7 eingesetzt, so daß die auf der Stirnseite 26 der Antriebswelle 4 angeordneten Kettenräder 5 innerhalb des Rahmenprofiles 2 zu liegen kommen und das Kettenrad 89 der Stirnseite 32 der Antriebswelle 4 außerhalb des Rahmenprofils, vor dem Lagerdeckel 7 positioniert ist. Über eine Duplexkette erfolgt die Wellenverbindung mit der Zwischenwelle 13, wobei die Zwischenwelle 13 wiederum mit der hier nicht dargestellten Motorwelle ebenfalls mit einer Duplexkette verbunden wird.

In die T-Nuten-förmig ausgebildete Gleitkufe 25 des Rahmenprofils 2, welche die Deckfläche 22 des Rahmenprofils 2 bildet, wird zur Unterstützung der Ketten 10 eine Gleitleiste 14 eingesetzt. In die Gleitkufen 17, welche ebenfalls T-Nuten-förmig ausgebildet sind, wird die Motorkonsole 16 eingeführt und fixiert.

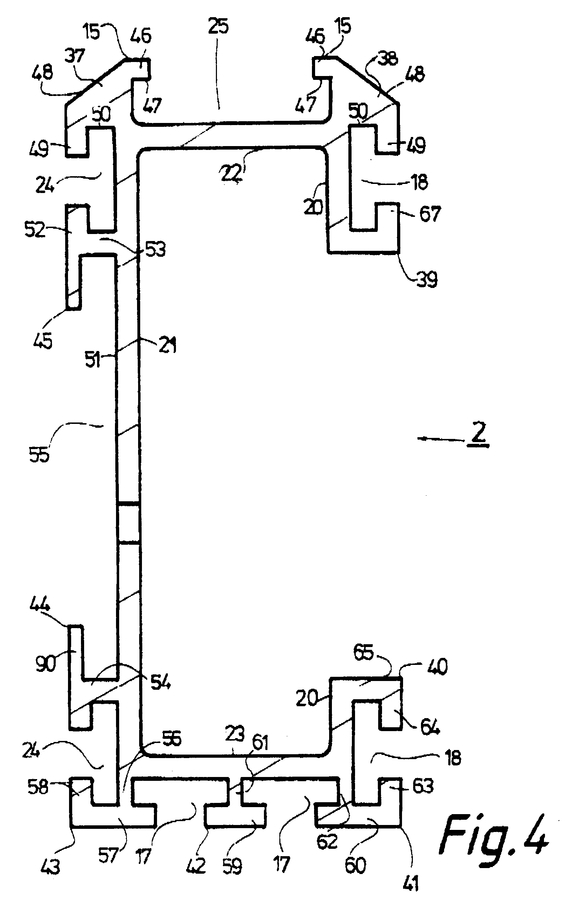

Die Figur 4 zeigt das dem Bausatz 1 zugehörige erfindungsgemäße Rahmenprofil 2. Das Rahmenprofil 2 besitzt einen rechteckförmigen Grundkörper, bestehend aus den Wandungen 20, 21, der Deckfläche 22 und der Bodenfläche 23. Am Umfang verteilt sitzen am Rahmenprofil 2 erhabene Nocken oder Haken 37 bis 45. Die im Bereich der Deckfläche 22 angeordnete Nocken 37 und 38 besitzen wiederum ausragende Nasen 46, welche die Profiloberkante 15 bilden. Da die Nasen 46 sich von den Nocken 37,38 gegen die Profilmitte abheben, wird ein Absatz 47 gebildet, so daß die Gleitkufe 25 im Bereich der Deckfläche 22 eine T-Nuten-förmige Gestalt erhält. Ausgehend von der Profiloberkante 15 werden die Nasen 46 in die eine Abschrägung 48 übergeführt, welche in eine senkrecht nach unten weisende Hakenfläche 49 übergehen. Diese Hakenflächen 49 stehen über den Nockenkörper bzw. dessen innenliegende Kante 50 nach senkrecht unten über und ist von der rechteckförmigen Grundkörperaußenkante 51 beabstandet. Im Zusammenspiel mit den Nocken 45, dessen Flansch 52 mittels eines Steges 53 von der Profilaußenkante 51 beabstandet ist, und in Richtung der Hakenfläche 49 des Nockens 37 gerichtet ist, wird die T-Nuten-förmige Gleitkufe 24 an der Profilaußenseite 51 gebildet. Der vorgenannte Flansch 52 des Hakens 45 ragt darüberhinaus auch noch senkrecht nach unten und ist hierbei gegen den Nocken oder Haken 44, der sich ebenfalls über einen Steg 54 von der Profilaußenkante 51 abhebt und von diesem distanziert ist. Dieser Nocken/Haken 44 weist ebenfalls ein beidseits des Steges 54 überragenden Flansch 90 auf, so daß zwischen dem Nocken 45 und dem Nocken 44 eine T-Nuten-förmige Gleitkufe 55 gebildet ist.

Der Nocken 44 korrespondiert mit einem weiteren Nocken 43, welche beide an der Profilaußenkante 51 bzw. der Nocken 43 an der Kante zwischen Profilaußenkante 51 und Bodenfläche 23 angeordnet ist. Der Nocken 43 hebt sich mittels eines senkrecht nach unten weisenden Steges 56 vom Profilhauptkörper ab und geht in einen Flansch 57 über. An seiner zur Profilaußenkante liegenden Seite trägt der Flansch 57 eine Abwinkelung 58, die senkrecht nach oben steht und auf den Flansch 90 des Nockens 44 gerichtet ist. Die Abwinkelung 58 des Nockens 43, wie auch der Flansch 90 des Nockens 44 sind dabei von ihren Stegen bzw. Flanschen 54 und 57 derart erhaben, daß wiederum eine T-Nuten-förmige Gleitkufe 24 gebildet ist. Im Bereich der Bodenfläche 23 des Rahmenprofiles 2 sind zwei T-Nuten-förmig ausgebildete Gleitkufen 17 angeordnet. Gebildet werden diese durch den Flansch 57, einen Flansch 59 und einen Flansch 60. Der Flansch 57 des Nockens 43 ist, wie bereits dargelegt, mittels des Steges 56 von der Bodenfläche 23 beabstandet und ragt zur Profilinnenseite hin über den Steg 56 hinaus.

Der Flansch 59 des Nockens 42 ist mittels eines Steges 61 von der Bodenfläche 23 des Rahmenprofils 2 beabstandet. Der Steg 61 ragt hierbei senkrecht nach unten von der Bodenfläche 23 ab und trägt rechtwinkelig ausgerichtet den vorgenannten Flansch 59, welcher beidseits über die Wandung des Steges 61 überragt, so daß durch die geometrische Ausbildung des Nockens 43 und des Nockens 42 zunächst die Gleitkufe 17 gebildet ist und die daneben liegende Gleitkufe 17 korrespondierend mit der Nockenausbildung 41 entsteht. Hierzu ragt der Nocken 41 bzw. dessen Flansch 60 mittels eines Steges 62 von der Bodenfläche 23 des Rahmenprofiles 2 ab, wobei der Steg 62 senkrecht nach unten gerichtet ist und etwa rechtwinkelig zu ihm der Flansch 60 angeordnet ist.

Dieser ragt über die Stegstärke, gegen den Nocken 42 gerichtet, hinaus. Somit ist auch hier eine T-Nuten-förmige Gleitkufe 17 gebildet. Gegen die Profilinnenseite gerichtet, ragt der Flansch 60 über die Wandung 20 hinaus und trägt senkrecht nach oben weisend eine Abwinkelung 63. Diese Abwinkelung 63 ist senkrecht nach oben weisend gegen die Abwinkelung 64 des Nockens 40 gerichtet, welcher wiederum von der Wandung 20 über den Steg 65 von der Wandung 20 beabstandet ist. Im Zusammenspiel zwischen Nocken 40 und 41 bzw. dessen Formgebung wie zuvor beschrieben, wird die T-Nuten-förmige Gleitkufe 18 an der Profilinnenwand 20 gebildet. Eine gleichgestaltete Gleitkufe 18 befindet sich im Bereich der Profilinnenwandung 20, im Übergangsbereich zur Deckfläche 22. An der Kante zwischen Profilwandung 20 und Deckfläche 22 ist ein Nocken 38 positioniert, der im Bereich der Deckfläche 22 etwas beabstandet von dieser eine Nase 46 trägt, welche über den Nockenkörper 38 gegen die Nase 46 des Nockens 37 gerichtet ausragt. Hier wird, wie bereits zuvor beschrieben, die T-Nuten-förmig ausgebildete Gleitkufe 25 gebildet. Von der Profilwandung 20 beabstandet, trägt der Nocken 38 eine Nase 49, welche senkrecht nach unten gerichtet ist. Diese korrespondiert mit einer Nase 67 des Nockens 39, welche senkrecht nach oben gegen die Nase 49 gerichtet ist. Somit wird eine äquivalente Gleitkufe 18 zur Gleitkufe im Bodenbereich bzw. Übergangsbereich zur Profilinnenkante gebildet.

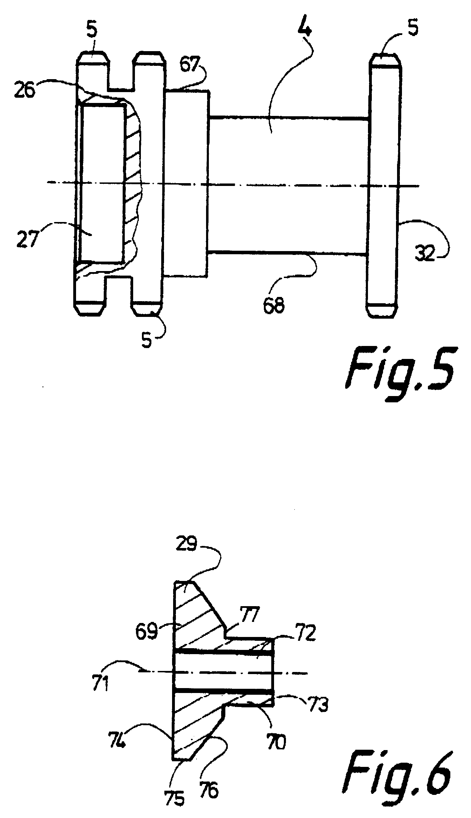

Die Figur 5 zeigt die Antriebswelle 4. Die Antriebswelle 4 kann einerseits aus einem Wellenkörper gebildet werden, die aufgesetzte Kettenräder 5 bzw. 89 trägt oder auch mit dieser einstückig ausgebildet sein. In diesem Ausführungsbeispiel sind auf der Antriebswelle 4 drei Kettenräder 5/89 angeordnet. Zwei Kettenräder befinden sich an der zur Profilaußenkante hinweisenden Stirnseite 26 und ein Kettenrad 89 auf der zum Motor hinweisenden Stirnseite 32. Die auf der linken Seite angeordneten Kettenräder 5 bilden hierbei einen Kettenradpaar, während das auf der rechten Seite, im Bereich der zum Motor hinweisenden Stirnseite 32 angeordnete Kettenrad 89 mit dem Kettenrad der Zwischenwelle ebenfalls ein Kettenradpaar bildet. Zwischen dem Kettenrad 89 der zum Motor hinweisenden Stirnseite 32 und dem inneren Kettenrad 5 der zur Profilaußenwand hinweisenden Stirnseite 26 ist, ausgehend von einem ersten Absatz 67 eine Eindrehung 68 gebildet, auf der das Wellenlager 31 aufgebracht wird. An der Profilaußenkante hinweisenden Stirnseite 26 ist eine innere Ausnehmung 27 für das Führungslager 28 vorgesehen.

Figur 6 zeigt die Führungsbüchse 29. Diese besitzt einen kegelstumpfförmigen Kopf 69 und einen zylindrischen Führungskörper 70. Zentrisch, um die Mittelachse 71 ist eine Gewindebohrung 72, welche die Führungshülse 29 von ihrer Stirnseite 73 bis zur Kopfseite 74 durchsetzt. Von der äußeren Umfangswandung 75 erstreckt sich der konische Zulauf 76 bis hin zu einem Absatz 77, welcher an das Führungslager 28 anschlägt. Der zylindrische Führungskörper 70 ragt in die Innenbohrung 78 (siehe Fig.3) des Führungslagers 28 ein.

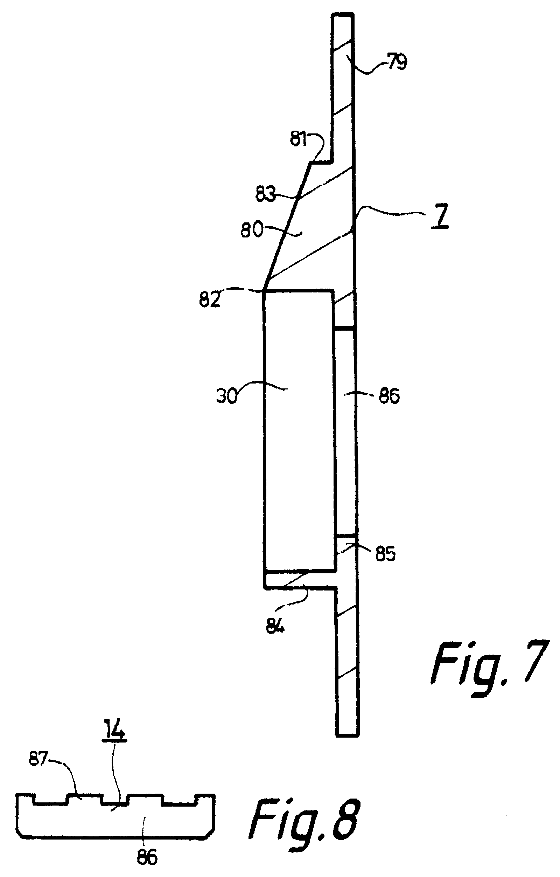

Die Figur 7 zeigt den Lagerdeckel 7. Ausgehend von einer Deckelfläche 79 erhebt sich gegen die Profilinnenseite gerichtet eine Verdickung 80, welche sich über eine senkrecht zur Deckelfläche 79 ausgerichteten Kante 81 absetzt. Zwischen dieser Kante 81 und der höchsten Kante 82 der Verdickung 80 liegt eine abgeschrägte Fläche 83 vor. Im unteren Bereich des Lagerdeckels 7 erhebt sich im Querschnitt gesehen ein Steg 84, welcher Teil der Verdickung 80 ist und somit die Umfangswandung für das Wellenlager 31 bildet. Hierzu ist im Lagerdeckel bzw. in der Verdickung 80 eine Ausnehmung 30 für das Wellenlager 31 eingebracht. Als Lageranschlag dient der zentrisch angeordnete Steg 85, der die Wellenbohrung 86 begrenzt.

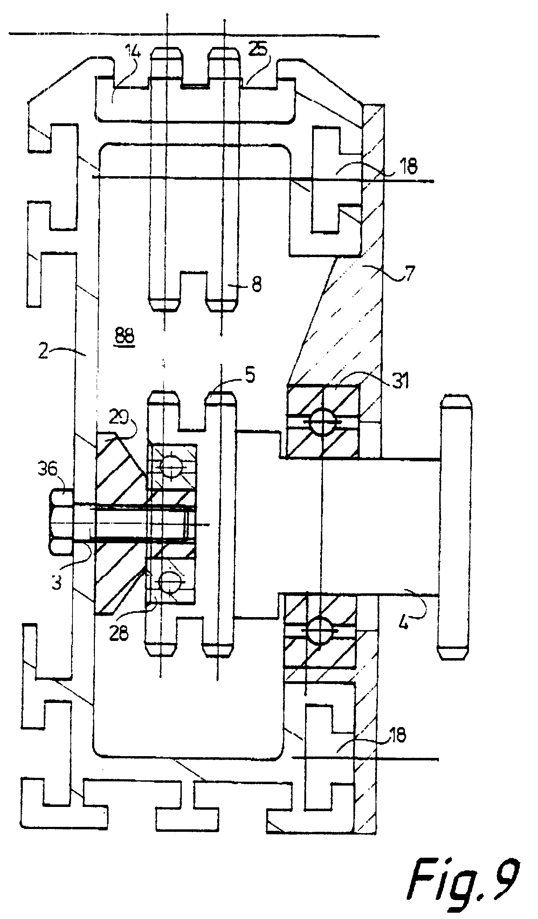

Die Figur 8 zeigt die Gleitleiste 14, welche auf die Rahmenprofiloberkante 15 bzw. in die T-Nuten-förmige Gleitkufe 25 eingesetzt wird. Vom Grundkörper 86 der Gleitleiste 14 erheben sich kammartige Zähne 87, in welchen die Ketten 10 in ihrem Lauf unterstützt werden.

Figur 9 zeigt das vormontierte Rahmenprofil 2. Im inneren Hohlraum 88 des Rahmenprofiles 2 kommen die Umlenkräder 8 bzw. die Kettenräder 5 und auch teilweise die Antriebswelle 4 zu liegen. Durch die Lagerbohrung 3 wird eine Befestigungsschraube 36 durchgeführt und die Führungsbüchse 29 aufgedreht. Die das Führungslager 28 und das Wellenlager 31 aufweisende Antriebswelle 4 wird dann auf die Führungsbüchse 29 montiert. Gegebenenfalls kann die Montage der Führungsbüchse 29 auf die Antriebswelle 4 bereits zuvor erfolgen, so daß lediglich noch die Befestigungsschraube 36 einzuführen ist. Entsprechend der jeweiligen Lage der Lagerbohrung 3 im Rahmenprofil 2 kann der Lagerdeckel 7 mit den vormontierten Teilen innerhalb der Gleitkufen 18 an der geeigneten Stelle des Rahmenprofiles positioniert und fixiert werden.
Analog wird mit den Umlenkrädern 8 verfahren.

Mit der vorliegenden Erfindung wird ein Bausatz geschaffen, mittels dem eine Standardisierung und Bildung eines Baukastensystems für Kettenförderer, Kettenstauförderer und/oder Zahnriemenförderer ermöglicht wird.

### Bezugszeichenliste

- 1: Bausatz
- 2: Rahmenprofil
- 3: Lagerbohrungen
- 4: Antriebswelle
- 5: Kettenrad/Riemenscheibe
- 6: Profilinnenseite
- 7: Lagerdeckel
- 8: Umlenkrad/Umlenkscheibe
- 9: Spannbox
- 10: Kette/Riemen
- 11: Lagerbohrung
- 12: Motor
- 13: Zwischenwelle
- 14: Gleitleiste
- 15: Profiloberkante
- 16: Motorkonsole
- 17: Gleitkufen
- 18: Gleitkufen
- 19: Transportbahn
- 20: Wandung von 2
- 21: Wandung von 2
- 22: Deckfläche von 2
- 23: Bodenfläche von 2
- 24: Gleitkufen
- 25: Gleitkufen
- 26: Stirnseite von 4 bzw. 5
- 27: Ausnehmung von 4 bzw. 5
- 28: Führungslager
- 29: Führungsbüchse
- 30: Ausnehmung von 7
- 31: Wellenlager
- 32: Stirnseite von 4
- 33: Umlenkkopf von 9
- 34: Lager und Fixierausnehmung von 9
- 35: Ausgangswelle
- 36: Befestigungsschraube
- 37: bis
- 45: Nocken/Haken
- 46: Nasen von 37 und 38
- 47: Absatz in 37 und 38
- 48: Abschrägung von 37 und 38
- 49: Hakenfläche von 37 und 38
- 50: Innenliegende Kante von 37 und 38
- 51: Profilaußenkante
- 52: Flansch von 45
- 53: Steg von 45
- 54: Flansch von 44
- 55: Gleitkufe
- 56: Steg von 43
- 57: Flansch von 43
- 58: Abwinkelung von 57
- 59: Flansch von 42
- 60: Flansch von 41
- 61: Steg von 42
- 62: Steg von 41
- 63: Abwinkelung von 41
- 64: Abwinkelung von40
- 65: Steg
- 66: -
- 67: Absatz auf 4
- 68: Eindrehung
- 69: Kopf von 29
- 70: zylindrische Führungskörper von 29
- 71: Mittelachse von 29
- 72: Gewindebohrung von 29
- 73: Stirnseite von 29
- 74: Kopfseite von 29
- 75: Umfangswand von 29
- 76: konischer Auslauf
- 77: Absatz
- 78: Innenbohrung von 28
- 79: Deckelfläche von 7
- 80: Verdickung von 7
- 81: Kante von 7
- 82: Kante
- 83: abgeschrägte Fläche von 7
- 84: Steg
- 85: Steg
- 86: Grundkörper von 14
- 87: Zähne von 14
- 88: innerer Hohlraum von 2
- 89: Kettenrad
- 90: Flansch von 44

## Patentansprüche

1. Bausatz zur Standardisierung und Bildung eines Baukastensystems für Kettenförderer, Kettenstauförderer und/oder Zahnriemenförderer, bestehend aus folgenden Elementen:
- mindestens einem Rahmenprofil (2)
- mindestens einer Antriebswelle (4), welche durch eine Mehrzahl von vorgefertigten Lagerbohrungen (3) an nahezu beliebiger Profilstelle vormontierbar ist und über einen, an der Profilinnenseite (6) anordenbaren Lagerdeckel (7) gelagert ist und mindestens eine Riemenscheibe oder ein Kettenrad (5) trägt,
- entsprechend der Ketten- oder Riemenführung zuordenbaren Umlenkscheiben oder Umlenkrädern (8), die über die mit einer Gleitleiste (14) abdeckbare Profiloberkante (15) ausragen und über eine, mittels einer Mehrzahl von vorgefertigten Lagerbohrungen (11) an nahezu beliebiger Profilstelle vormontierbaren Spannbox (9), über welche der Riemen oder die Kette (10) geführt ist, mit der Antriebswelle (4) korrespondieren,
- einer, eine Adapterfunktion zwischen Antriebswelle (4) und Motor (12) einnehmenden Zwischenwelle (13), sowie
- einer an den verwendeten Rahmenprofilen (2) anordenbaren Motorkonsole (16).

2. Bausatz nach Anspruch 1,
dadurch gekennzeichnet,
daß das Rahmenprofil (2) Gleitkufen oder Nuten (17,18) aufweist, innerhalb derer die Motorkonsole (16) und/oder Lagerdeckel (7) verschieblich anordenbar und fixierbar sind.

3. Bausatz nach mindestens einem der Ansprüche 1 und 2,
dadurch gekennzeichnet,
daß das Rahmenprofil (2) als Hohlprofil ausgebildet ist.

4. Bausatz nach mindestens einem der Ansprüche 1 bis 3,
dadurch gekennzeichnet,
daß das Rahmenprofil (2) U-förmig ausgebildet ist, wobei die zur Transportbahn (19) gerichtete Wandung (20) offen ausgebildet ist.

5. Bausatz nach mindestens einem der Ansprüche 1 bis 4,
dadurch gekennzeichnet,
daß das Rahmenprofil (2) an seinen Wandungen (20,21) und Deck-(22) bzw. Bodenflächen (23) Bausatzelemente aufnehmende Gleitleisten (17,18,24,25) aufweist.

6. Bausatz nach Anspruch 5,
dadurch gekennzeichnet,
daß die Gleitleisten (17,18,24,25) des Rahmenprofils (2) T-Nuten-förmig ausgebildet sind.

7. Bausatz nach mindestens einem der Ansprüche 1 bis 6,
dadurch gekennzeichnet,
daß die Antriebswelle (4) und das Kettenrad (5) einstückig ausgebildet sind.

8. Bausatz nach mindestens einem der Ansprüche 1 bis 7,
dadurch gekennzeichnet,
daß die Antriebswelle (4) bzw. das Kettenrad (5) an seiner/ihrer von der Transportbahn (19) wegweisenden Stirnseite (26) eine Ausnehmung (27) zur Aufnahme eines Führungslagers (28) aufweist.

9. Bausatz nach Anspruch 8,
dadurch gekennzeichnet,
daß dem Führungslager (28) eine fixierbare Führungsbüchse (29) zugeordnet ist.

10. Bausatz nach mindestens einem der Ansprüche 1 bis 9,
dadurch gekennzeichnet,
daß der Lagerdeckel (7) eine Ausnehmung (30) zur Aufnahme eines Wellenlagers (31) aufweist.

11. Bausatz nach mindestens einem der Ansprüche 1 bis 10,
dadurch gekennzeichnet,
daß die Antriebswelle (4) an seiner zur Tranportbahn (19) hinweisenden Stirnseite (32) ein, mit der Zwischenwelle (13) korrespondierendes Kupplungs- oder Verbindungsmittel (89) aufweist.

12. Bausatz nach Anspruch 11,
dadurch gekennzeichnet,
daß das Kupplungs- oder Verbindungsmittel (89) der Antriebswelle (4) als Kettenrad ausgebildet ist.

13. Bausatz nach mindestens einem der Ansprüche 1 bis 12,
dadurch gekennzeichnet,
daß die Gleitleiste (14) kammartig ausgebildet ist.

14. Bausatz nach mindestens einem der Ansprüche 1 bis 13,
dadurch gekennzeichnet,
daß die Spannbox (9) mindestens einen Umlenkkopf (33) aufweist.

15. Bausatz nach mindestens einem der Ansprüche 1 bis 14,
dadurch gekennzeichnet,
daß die Spannbox (9) langlochförmige Lager- und Fixierausnehmungen (34) aufweist.

## Claims

1. Kit for the standardisation and formation of a modular system for chain conveyors, chain stowing conveyors and/or cog-belt conveyors, consisting of the following elements:
- at least one frame profile (2);
- a least one drive shaft (4), which can be premounted at almost any point on the profile by means of a plurality of prefabricated bearing holes (3) and is supported by a bearing cover (7) arranged on the inside (6) of the profile and bears at least one belt pulley or one sprocket (5);
- return pulleys or return sprockets (8) corresponding to the path of the chain or belt, projecting beyond the upper edge (15) of the profile covered by a slide strip (14) and above a tensioning box which can be premounted at almost any point on the profile by means of a plurality of prefabricated bearing holes (11), via which tensioning box is led the belt or chain (10) corresponding to the drive shaft (4);
- an intermediate shaft (13) performing an adapter function between the drive shaft (4) and motor (12); and
- a motor bracket (16) arranged on the frame profiles (2) used.

2. Kit as claimed in Claim 1, characterised in that the frame profile (2) has skids or grooves (17, 18), in which the motor bracket (16) and/or bearing cover (7) is displaceably arranged and secured.

3. Kit as claimed in at least one of Claims 1 and 2, characterised in that the frame profile (2) is designed as a hollow section.

4. Kit as claimed in at least one of Claims 1 to 3, characterized in that the frame profile (2) is designed in a U-shape, wherein the wall (20) facing the conveyor track (19) is of an open design.

5. Kit as claimed in at least one of Claims 1 to 4, characterised in that the frame profile (2), on its walls (20, 21) and upper (22) and lower surfaces (23), has slide strips (17, 18, 24, 25) to receive kit elements.

6. Kit as claimed in Claim 5, characterized in that the slide strips (17, 18, 24, 25) of the frame profile (2) are designed in the form of T-grooves.

7. Kit as claimed in at least one of Claims 1 to 6, characterized in that the drive shaft (4) and the sprocket (5) are designed as a single piece.

8. Kit as claimed in at least one of Claims 1 to 7, characterized in that the drive shaft (4) or sprocket (5), at its end face (26) facing away from the conveyor track (19), has a recess (27) to receive a guide bearing (28).

9. Kit as claimed in Claim 8, characterized in that a fixable guide bush (29) is associated with the guide bearing (28).

10. Kit as claimed in at least one of Claims 1 to 9, characterized in that the bearing cover (7) has a recess (30) to receive a shaft bearing (31).

11. Kit as claimed in at least one of Claims 1 to 10, characterized in that the drive shaft (4), at its end (32) facing towards the conveyor track (19), has a coupling or connecting means (89) corresponding to the intermediate shaft (13).

12. Kit as claimed in Claim 11, characterized in that the coupling or connecting means (89) of the drive shaft (4) is designed as a sprocket.

13. Kit as claimed in at least one of Claims 1 to 12, characterized in that the slide strip (14) is designed comb-shaped.

14. Kit as claimed in at least one of Claims 1 to 13, characterized in that the tensioning box (9) has at least one return head (33).

15. Kit as claimed in at least one of Claims 1 to 14, characterized in that the tensioning box (9) has slot-shaped bearing and fixing holes (34).

## Revendications

1. Ensemble de pièces de construction destiné à la standardisation et à la réalisation d'un système de construction modulaire pour des transporteurs à chaîne, des transporteurs ralentisseurs à chaîne et/ou des transporteurs à courroie dentée, constitué des éléments suivants :
- au moins un profilé de cadre (2),
- au moins un arbre d'entraînement (4), qui peut être monté préalablement à pratiquement n'importe quel emplacement du profité par une pluralité d'alésages de palier (3) préfabriqués, et qui est logé au-dessus d'un couvercle (7) de palier pouvant être disposé sur la face interne (6) du profilé, et qui porte au moins une poulie ou une roue à chaîne (5),
- des disques de renvoi ou des roues de renvoi (8) pouvant être associés en fonction du guidage de la chaîne ou de la courroie, qui font saillie au-dessus du bord supérieur (15) du profilé pouvant être recouvert par une barre de glissement (14), et qui correspondent avec l'arbre d'entraînement (4) par l'intermédiaire d'une boîte de tension (9) qui peut être montée préalablement à pratiquement n'importe quel emplacement du profité par une pluralité d'alésages de palier (11) préfabriqués, par l'intermédiaire de laquelle est guidée la courroie ou la chaîne (10),
- un arbre de renvoi (13) assurant une fonction d'adaptateur entre l'arbre d'entraînement (4) et te moteur (12), ainsi que
- une console (16) de moteur pouvant être disposée sur le profilé de cadre (2) utilisé.

2. Ensemble de pièces de construction selon la revendication 1,
caractérisé en ce que,
le profilé de cadre (2) comporte des patins de glissement ou des rainures (17, 18) à l'intérieur desquels la console (16) de moteur et/ou le couvercle (7) de palier peuvent être disposés en translation, et fixés.

3. Ensemble de pièces de construction selon au moins l'une des revendications 1 et 2,
caractérisé en ce que,
le profilé de cadre (2) est réalisé en tant que profilé creux.

4. Ensemble de pièces de construction selon au moins l'une des revendications 1 à 3,
caractérisé en ce que,
le profilé de cadre(2) est réalisé en forme de U, la paroi (20) orientée vers la voie de transport (19) étant ouverte.

5. Ensemble de pièces de construction selon au moins l'une des revendications 1 à 4,
caractérisé en ce que,
sur ses parois (20, 21) et ses surfaces de recouvrement (22) ou de fond (23), le profilé de cadre (2) comporte des barres de glissement (17, 18, 24, 25) recevant les éléments de l'ensemble de pièces de construction.

6. Ensemble de pièces de construction selon la revendication 5,
caractérisé en ce que,
les barres de glissement (17, 18, 24, 25) du profilé de cadre (2) sont réalisées en tant que rainures avant la forme d'un T.

7. Ensemble de pièces de construction selon au moins l'une des revendications 1 à 6,
caractérisé en ce que,
l'arbre d'entraînement (4) et la roue à chaîne (5) sont réalisés en une seule pièce.

8. Ensemble de pièces de construction selon au moins l'une des revendications 1 à 7,
caractérisé en ce que,
au niveau de sa/leur face frontale (26) éloignée de la voie de transport (19), l'arbre d'entraînement (4) ou la roue à chaîne (5) comporte un évidement (27) qui est destiné à recevoir un palier de guidage (28).

9. Ensemble de pièces de construction selon la revendication 8,
caractérisé en ce que,
une douille de guidage (29) pouvant être fixée est associée au palier de guidage (28).

10. Ensemble de pièces de construction selon au moins l'une des revendications 1 à 9,
caractérisé en ce que,
le couvercle (7) de palier comporte un évidement (30) qui est destiné à recevoir un palier d'arbre (31).

11. Ensemble de pièces de construction selon au moins l'une des revendications 1 à 10,
caractérisé en ce que,
au niveau de sa face frontale (32) orientée vers la voie de transport (19), l'arbre d'entraînement (4) comporte un moyen de couplage ou de liaison (89) correspondant avec l'arbre de renvoi (13).

12. Ensemble de pièces de construction selon la revendication 11,
caractérisé en ce que,
le moyen de couplage ou de liaison (89) de l'arbre d'entraînement (4) est réalisé en tant que roue à chaîne.

13. Ensemble de pièces de construction selon au moins l'une des revendications 1 à 12,
caractérisé en ce que,
la barre de glissement (14) est réalisée sous la forme d'un peigne.

14. Ensemble de pièces de construction selon au moins l'une des revendications 1 à 13,
caractérisé en ce que,
la boite de tension (9) comporte au moins une tête de renvoi (33).

15. Ensemble de pièces de construction selon au moins l'une des revendications 1 à 14,
caractérisé en ce que,
la boîte de tension (9) comporte des évidements de logement et de fixation (34) avant la forme de trous oblongs.
